(19) Europäisches Patentamt
European Patent Office
Office européen des brevets

(11) **EP 2 194 666 A1**

(12) **EUROPEAN PATENT APPLICATION**
published in accordance with Art. 153(4) EPC

(43) Date of publication:
**09.06.2010 Bulletin 2010/23**

(51) Int Cl.:
*H04J 11/00* (2006.01)    *G01R 29/26* (2006.01)
*H04B 17/00* (2006.01)

(21) Application number: **08833331.5**

(22) Date of filing: **25.09.2008**

(86) International application number:
**PCT/JP2008/067353**

(87) International publication number:
**WO 2009/041542 (02.04.2009 Gazette 2009/14)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.09.2007 JP 2007256312**
**28.09.2007 JP 2007255891**

(71) Applicant: **Kyocera Corporation**
**Kyoto-shi**
**Kyoto 612-8501 (JP)**

(72) Inventors:
• **NAKAYAMA, Taku**
**Yokohama-shi**
**Kanagawa 224-8502 (JP)**
• **OKINO, Kenta**
**Yokohama-shi**
**Kanagawa 224-8502 (JP)**

(74) Representative: **Grünecker, Kinkeldey,**
**Stockmair & Schwanhäusser**
**Anwaltssozietät**
**Leopoldstrasse 4**
**80802 München (DE)**

(54) **RADIO COMMUNICATION DEVICE, AND RECEPTION QUALITY ESTIMATING METHOD**

(57)    A radio base station 1100 comprises a frequency-domain/time-domain converter 1160 for converting transfer route estimation information again into a time domain signal series or a signal series in a time domain, and a time domain SNR estimator 1170 for calculating the signal power of a radio singnal on the basis of the time domain signal series contained in a time band (ts), of the whole time domain containing the time domain signal series converted again, and for calculating a noise power on the basis of the time domain signal series contained in a time band (tn), thereby to estimate the signal-to-noise ratio of the radio signal.

FIG. 2

EP 2 194 666 A1

**Description**

TECHNICAL FIELD

The present invention relates to a radio communication device that converts a received radio signal into a signal sequence in frequency domain, and calculates channel estimation information on the basis of a known signal included in the radio signal, the channel estimation information indicating estimation of a state of a channel of the radio signal. The present invention also relates to a reception quality estimation method for the radio communication device.

BACKGROUND ART

In recent years, a radio communication system is implemented in which a communication capacity is increased by using a multi-carrier scheme, such as orthogonal frequency division multiplexing (OFDM). In one method introduced for such radio communication system, a radio communication device which is to perform communications is adaptively allocated radio resources, such as the number of subcarriers, in accordance with a reception quality of a radio signal, so as to further increase a communication capacity usable by the radio communication system as a whole.

A signal-to-noise ratio (SNR) is widely employed as the reception quality used in determination of such radio resource allocation.

Specifically, having received a temporally-discrete radio signal, a radio communication device performs fast Fourier transform (FFT) on the radio signal to convert the radio signal into a signal sequence in frequency domain. Further, the radio communication device calculates an average signal vector (channel estimation information) based on a state of a known signal (a known symbol) the set value of which, such as amplitude or phase, is known to the transmitter side and to the receiver side. The average signal vector is the average of I components and Q components of the respective known signals. The radio communication device also calculates a noise power, based on a signal vector distribution of the known signals. The radio communication device estimates an SNR of the radio signal by using the average signal vector and the noise power thus calculated (for example, Patent Literature 1).

[Patent Literature 1] Japanese Patent Application Publication No. 2002-319919 (page 5, drawings 1 and 2)

DISCLOSURE OF THE INVENTION

Incidentally, in the radio communication system employing a multi-carrier scheme, such as OFDM, a time per symbol is generally longer than that in a radio communication system employing a single-carrier scheme. Further, the radio communication system employing the multi-carrier scheme occupies a wider band than the radio communication employing the single-carrier scheme, and therefore the reception quality possibly changes depending on the frequency band used.

Accordingly, the above-described method for estimating the reception quality (SNR) of a radio signal on the basis of the average signal vector (channel estimation information) and the noise power has a problem that the accuracy in estimating the reception quality of the radio signal is low.

The following may be performed to solve such problem: converting the channel estimation information into a signal sequence in time domain, and processing the signal sequence in the time domain. However, when the known signals are arranged at a predetermined interval in a frequency-axis direction or in a time-axis direction, and when linear interpolation is performed on the channel estimation information in multiple signals (signals including user data and the like) between the known signals, the noise power is undesirably smoothed out. This leads to a problem that a reception quality (SNR) calculated is better than the actual reception quality.

The present invention has been made in consideration of such circumstances, and has an objective to provide a radio communication device and a reception quality estimation method that allow a reception quality of a radio signal to be estimated with improved accuracy when the reception quality of the radio signal is estimated based on known signals, and particularly, when a multi-carrier scheme is employed.

To solve the above-described problem, a first characteristic of the present invention is a radio communication device (radio base station 1100) that converts a received radio signal (radio signal RS) into a signal sequence (signal sequences S2) in frequency domain, and calculates channel estimation information on the basis of a known signal (known symbol SP) included in the radio signal, the channel estimation information (channel estimation information H^[k]) indicating estimation of a state of a channel of the radio signal. The radio communication device comprising: a re-converter (frequency-domain/time-domain converter 1160) configured to re-convert the channel estimation information into a time-domain signal sequence (signal sequence S3) which is a signal sequence in time domain; a divider (time-domain SNR estimator 1170) configured to divide a total time range including the time-domain signal sequence obtained by the re-conversion by the re-converter, into a first time range (time range ts) and a second time range (time range tn), the first time range including a signal component whose amplitude of the time-domain signal sequence exceeds a predetermined threshold, the second time range being a time range other than the first time range; and an SNR estimator (time-domain SNR estimator 1170) configured to estimate a signal-to-noise ratio of the radio signal by calculating a signal power (W-Na) of the radio signal on the basis of the time-domain signal sequence included in the first time range, and by calculating a noise power (Na) on the basis of the time-domain signal sequence included in the second time range.

According to such radio communication device, a signal-to-noise ratio (SNR) of a radio signal is estimated based on signal sequences not in frequency domain but in time domain. This can prevent low accuracy in estimating the SNR even in a radio communication system having a long symbol length and using a wide band, particularly, in a radio communication system employing a multi-carrier scheme.

In other words, such radio communication device allows an SNR of a radio signal to be estimated with improved accuracy when the SNR of the radio signal RS is estimated based on the known symbols.

A second characteristic thereof is **characterized in that,** in the radio communication device according to the first characteristic, the divider determines a division position (division position D1) between the first time range and the second time range in accordance with a multipath state of the radio signal.

A third characteristic thereof is **characterized in that,** in the radio communication device according to the second characteristic, the divider determines the division position on the basis of a reception timing of a delay wave of the radio signal.

A fourth characteristic thereof is **characterized in that**, in the radio communication device according to the first characteristic, the radio signal is formed according to an orthogonal frequency division multiplexing scheme, and includes a guard interval (cyclic prefixes CP) preventing interference between symbols (data symbols SD), and the divider determines a division position (division position D1) between the first time range and the second time range on the basis of a time length of the guard interval.

A fifth characteristic thereof is **characterized in that**, in the radio communication device according to the first characteristic, the re-converter (2160) converts only the channel estimation information in the known signal into the time-domain signal sequence.

According to such radio communication device, a signal-to-noise ratio of a radio signal is estimated based on the signal sequences not in frequency domain but in time domain. Further, only the channel estimation information in the known symbols is converted into time-domain signal sequences. Accordingly, even when the known symbols are arranged at a predetermined interval in the frequency-axis direction or in the temporal-axis direction, a problem is prevented in which a noise power is smoothed out by performing linear interpolation on multiple signals positioned between the known symbols. Thus, the radio base station can prevent low accuracy in estimating an SNR.

A sixth characteristic thereof is **characterized in that**, in the radio communication device according to the fifth characteristic, the radio signal is formed of a plurality of subcarriers using different frequency bands, the radio signal includes a plurality of the known signals, and the plurality of known signals are arranged at a predetermined interval in a frequency-axis direction.

A seventh characteristic thereof is **characterized in that**, in the radio communication device according to the sixth characteristic, the plurality of known signals form a plurality of the predetermined intervals, and the plurality of predetermined intervals are equal to each other.

An eighth characteristic thereof is **characterized in that**, in the radio communication device according to the sixth characteristic, the plurality of known signals form a plurality of the predetermined intervals, and the plurality of predetermined intervals include: a first pattern in which an interval between the known signals is a first interval; and a second pattern in which an interval between the known signals is a second interval.

A ninth characteristic thereof is **characterized in that**, in the radio communication device according to the eighth characteristic, the first pattern and the second pattern overlap each other in the frequency-axis direction.

A tenth characteristic thereof is **characterized in that**, in the radio communication device according to the eighth characteristic or the ninth characteristic, the interval between the known signals in the first pattern is different from the interval between the known signals in the second pattern.

A eleventh characteristic of the present invention is a radio communication device that converts a received radio signal into a signal sequence in frequency domain, and calculates channel estimation information on the basis of a known signal included in the radio signal, the channel estimation information indicating estimation of a state of a channel of the radio signal. The radio communication device comprising: a re-converter configured to re-convert the channel estimation information into a time-domain signal sequence which is a signal sequence in time domain; a divider configured to divide a total time range including the time-domain signal sequence obtained by the re-conversion by the re-converter, into a first time range and a second time range, wherein the first time range including a signal component whose amplitude of the time-domain signal sequence exceeds a predetermined threshold, the second time range being a time range other than the first time range; and a noise-power calculator (time-domain SNR estimator 1170) configured to calculate a noise power of the radio signal on the basis of the time-domain signal sequence included in the second time range, the divider determines a division position between the first time range and the second time range in accordance with a multipath state of the radio signal.

A twelfth characteristic of the present invention is a radio communication device that converts a received radio signal into a signal sequence in frequency domain, and calculates channel estimation information on the basis of a known signal included in the radio signal, the channel estimation information indicating estimation of a state of a channel of the radio signal.The radio communication device comprising: a re-converter configured to re-convert the channel estimation information into a time-domain signal sequence which is a signal sequence in time domain; a divider configured to divide a time range including the time-domain signal sequence obtained by the re-conversion by the re-converter, into a first time range and a second time range, the first time range including a signal component whose amplitude of the time-domain signal sequence exceeds a predetermined threshold, the second time range being a time range other than the first time range; and a noise-power calculator (time-domain SNR estimator 2170) configured to calculate a noise power of the radio signal on the basis of the time-domain signal sequence included in the second time range, wherein the re-converter converts only the channel estimation information in the known signal into the time-domain signal sequence.

A thirteenth characteristic of the present invention is a reception quality estimation method for a radio communication device that converts a received radio signal into a signal sequence in frequency domain, and calculates channel estimation information on the basis of a known signal included in the radio signal, the channel estimation information indicating estimation of a state of a channel of the radio signal.The reception quality estimation method comprising the steps of: re-converting the channel estimation information into a time-domain signal sequence which is a signal sequence in time domain; dividing a total time range including the time-domain signal sequence obtained by the re-conversion, into a first time range and a second time range, the first time range including a signal component whose amplitude of the time-domain signal sequence exceeds a predetermined threshold, the second time range being a time range other than the first time range; and estimating a signal-to-noise ratio of the radio signal by calculating a signal power of the radio signal on the basis of the time-domain signal sequence included in the first time range, and by calculating a noise power on the basis of the time-domain signal sequence included in the second time range.

A fourteenth characteristic thereof is **characterized in that**, in the reception quality estimation method according to the thirteenth characteristic, in the reconversion step, only the channel estimation information in the known signal is converted into the time-domain signal sequence.

A fifteenth characteristic of the present invention is a reception quality estimation method for a radio communication device that converts a received radio signal into a signal sequence in frequency domain, and calculates channel estimation information on the basis of a known signal included in the radio signal, the channel estimation information indicating estimation of a state of a channel of the radio signal.The reception quality estimation method comprising the steps of: re-converting the channel estimation information into a time-domain signal sequence which is a signal sequence in time domain; dividing a time range including the time-domain signal sequence obtained by the re-conversion, into a first time range and a second time range, the first time range including a signal component whose amplitude of the time-domain signal sequence exceeds a predetermined threshold, the second time range being a time range other than the first time range; and calculating a noise power of the radio signal on the basis of the time-domain signal sequence included in the second time range, wherein in the noise-power calculation step, a division position between the first time range and the second time range is determined in accordance with a multipath state of the radio signal.

A sixteenth characteristic of the present invention is a reception quality estimation method for a radio communication device that converts a received radio signal into a signal sequence in frequency domain, and calculates channel estimation information on the basis of a known signal included in the radio signal, the channel estimation information indicating estimation of a state of a channel of the radio signal.The reception quality estimation method comprising the steps of: re-converting the channel estimation information into a time-domain signal sequence which is a signal sequence in time domain; dividing a time range including the time-domain signal sequence obtained by the re-conversion, into a first time range and a second time range, the first time range including a signal component whose amplitude of the time-domain signal sequence exceeds a predetermined threshold, the second time range being a time range other than the first time range; and calculating a noise power of the radio signal on the basis of the time-domain signal sequence included in the second time range, wherein in the re-conversion step, only the channel estimation information in the known signal is converted into the time-domain signal sequence.

The aspects of the present invention can provide a radio communication device and a reception quality estimation method that allow a reception quality of a radio signal to be estimated with improved accuracy when the reception quality of the radio signal is estimated based on known signals, and particularly, when a multi-carrier scheme is employed.

BRIEF DESCRIPTION OF THE DRAWINGS

[Fig. 1] Fig. 1 is a diagram showing an overall schematic configuration of a radio communication system according to first and second embodiments of the present invention.

[Fig. 2] Fig. 2 is a diagram showing a functional block configuration of a radio base station according to the first and second embodiments of the present invention.

[Fig. 3] Fig. 3 is a diagram showing a functional block configuration of a synchronization processor according to the second embodiment of the present invention.

[Fig. 4] Fig. 4 is a diagram showing a functional block configuration of a time-domain SNR estimator according to the second embodiment of the present invention.

[Fig. 5] Fig. 5 is a flowchart of an operation performed by the radio base station according to the first embodiment of the present invention to estimate an SNR of a radio signal.

[Fig. 6] is a flowchart of an operation performed by the radio base station according to the second embodiment of the present invention to estimate an SNR of a radio signal.

[Fig. 7] Fig. 7 is a diagram showing a configuration example of a signal sequence according to the first and second embodiments of the present invention.

[Fig. 8] Fig. 8 is a diagram showing an example of an impulse response according to the first embodiment of the present invention.

[Fig. 9] Fig. 9 is a diagram showing an example of an impulse response according to the second embodiment of the present invention.

[Fig. 10] Fig. 10 is a diagram showing an overall schematic configuration of a radio communication system according to a third embodiment of the present invention.

[Fig. 11] Fig. 11 is a diagram showing a functional block configuration of a radio base station according to the third embodiment of the present invention.

[Fig. 12] Fig. 12 is a flowchart of an operation performed by the radio base station according to the third embodiment of the present invention to estimate an SNR of a radio signal.

[Fig. 13] Fig. 13 is a diagram showing a configuration example of a signal sequence according to the third embodiment of the present invention.

[Fig. 14] Fig. 14 is a diagram showing a configuration example of a signal sequence according to a modification of the third embodiment of the present invention.

<u>BEST MODES FOR CARRYING OUT THE INVENTION</u>

Next, embodiments of the present invention will be described. Specifically, a first embodiment, a second embodiment, a third embodiment, and other embodiments of the present invention will be described. Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

[First Embodiment]

In the first embodiment of the present invention, descriptions are given as to (1) an overall schematic configuration of a radio communication system, (2) a functional block configuration of a radio communication device, (3) an operation of the radio communication device, and (4) advantageous effects.

(1) Overall Configuration of Radio Communication System

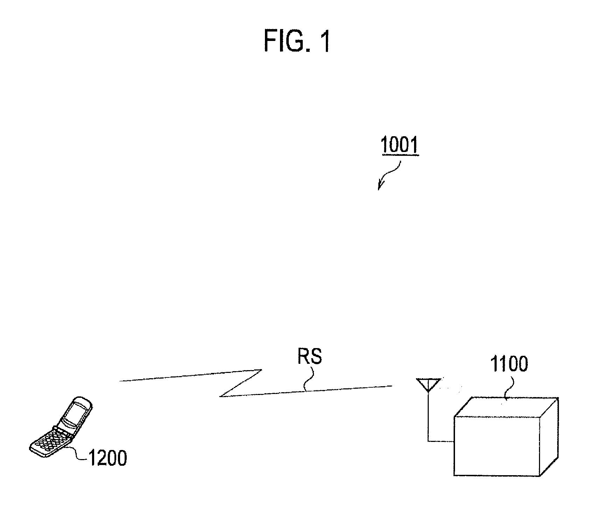

Fig. 1 is a diagram showing an overall schematic configuration of a radio communication system 1001 according to the present embodiment. As Fig. 1 shows, the radio communication system 1001 includes a radio base station 1100 and a radio communication terminal 1200. Note that the numbers of the radio base stations 1100 and the radio communication terminals 1200 included in the radio communication system 1001 are not limited to what is shown.

The radio communication system 1001 employs a so-called multi-carrier scheme, in which a radio signal RS is formed of multiple subcarriers. Specifically, the radio communication system 1001 employs an orthogonal frequency division multiplexing (OFDM) scheme. Accordingly, the radio signal RS is formed according to OFDM.

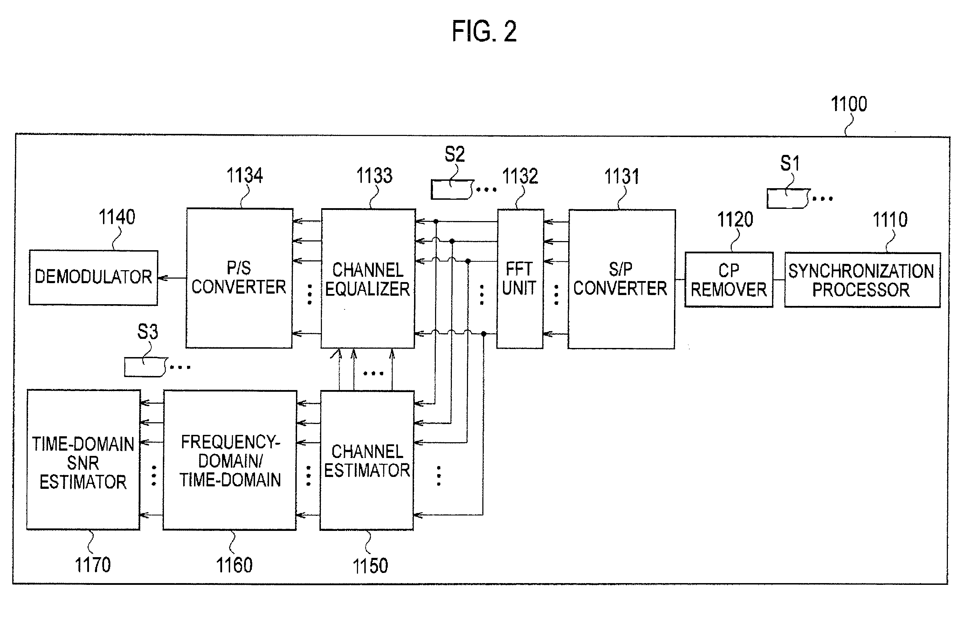

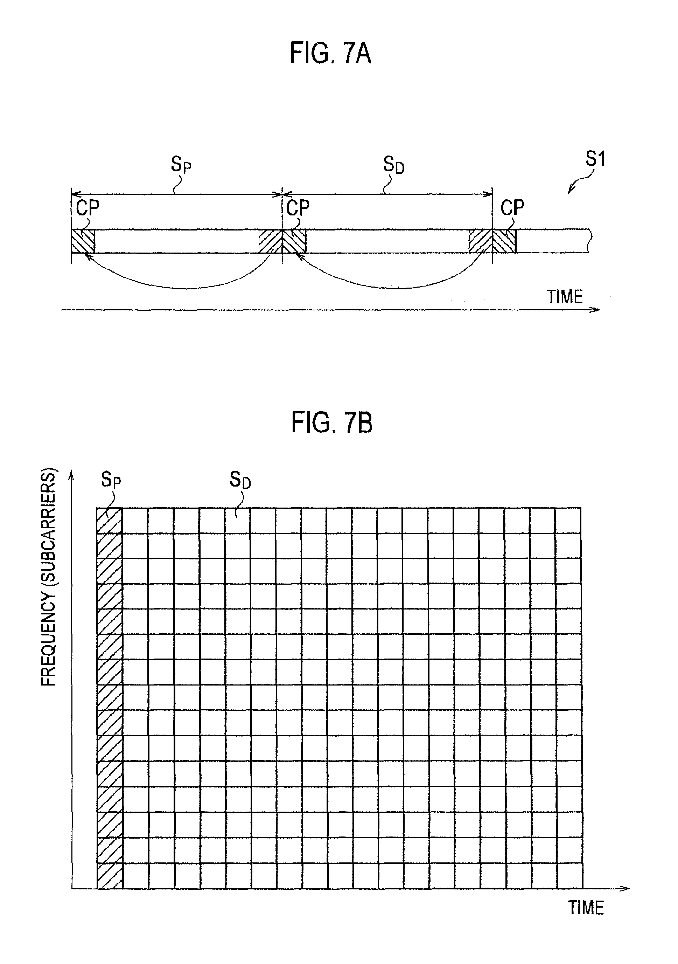

The radio base station 1100 transmits and receives the radio signal RS to and from the radio communication terminal 1200. In the present embodiment, the radio base station 1100 constitutes a radio communication device. The radio base station 1100 receives a temporally-discrete radio signal RS from the radio communication terminal 1200. The radio base station 1100 converts the received radio signal RS into signal sequences S2 in frequency domain (not shown in Fig. 1; see Fig. 2). Based on a known signal included in the radio signal RS, specifically, a known symbol SP (not shown in Fig. 1; see parts (a) and (b) of Fig. 7), the radio base station 1100 calculates channel estimation information indicating estimation of a state of a channel of the radio signal RS.

Like the radio base station 1100, the radio communication terminal 1200 converts a radio signal RS received from the radio base station 1100 into signal sequences in frequency domain, and calculates channel estimation information for the radio signal RS, based on a known symbol included in the radio signal RS.

(2) Functional Block Configuration of Radio Communication Device

Fig. 2 is a diagram showing a functional block configuration of the radio base station 1100 constituting the radio communication device in the present embodiment. As Fig. 2 shows, the radio base station 1100 includes a synchronization processor 1110, a CP remover 1120, an S/P converter 1131, an FFT unit 1132, a channel equalizer 1133, a P/S converter 1134, a demodulator 1140, a channel estimator 1150, a frequency-domain/time-domain converter 1160, and a time-domain SNR estimator 1170.

The synchronization processor 1110 performs processing for synchronizing signal sequences S1 included in respective subcarriers forming a radio signal RS received from the radio communication terminal 1200.

Parts (a) and (b) of Fig. 7 show a configuration example of the signal sequence S1. As parts (a) and (b) of Fig. 7 show, each signal sequence S1 includes a known symbol SP and data symbols SD. In the present embodiment, the known symbol SP is a so-called preamble, the set value of which, such as amplitude and phase, is known to the radio communication terminal 1200 (transmitter side) and to the radio base station 1100 (receiver side). In the present embodiment, as part (b) of Fig. 7 shows, each of the subcarriers includes the known symbol SP.

In addition, each signal sequence S1 includes cyclic prefixes CP. Each cyclic prefix CP is a guard interval for preventing interference between symbols. The cyclic prefix CP is inserted between the data symbols SD in order to absorb the influence that the radio signal RS has due to multipath. The cyclic prefix CP is a copy of a portion of a last part of a transmission symbol (any one of the known symbol SP and the data symbol SD) to which that cyclic prefix CP is to be given.

The CP remover 1120 removes the cyclic prefix CP included in the signal sequences S1 outputted from the synchronization processor 1110.

The S/P converter 1131 performs serial-to-parallel conversion on the signal sequences S1 outputted from the CP remover 1120. FFT unit 1132 performs fast Fourier transform (FFT) on each of the signal sequences outputted from the S/P converter 1131. By performing FFT on the signal sequences, the FFT unit 1132 outputs signal sequences S2 in frequency domain to the channel equalizer 1133 and to the channel estimator 1150.

The channel equalizer 1133 performs channel equalization on the signal sequences S2 outputted from the FFT unit 1132. Specifically, based on control by the channel estimator 1150, the channel equalizer 1133 corrects the signal sequences S2 having distortion in its phase and amplitude due to fading influence in the channel of the radio signal RS, and thereby reproduces the signal sequences transmitted from the radio communication terminal 1200.

The P/S converter 1134 performs parallel-to-serial conversion on the corrected signal sequences S2 outputted from the channel equalizer 1133. By using the signal sequences outputted from the P/S converter 1134, the demodulator 1140 performs demodulation processing, specifically, reproduces the signal sequences transmitted from the radio communication terminal 1200.

The channel estimator 1150 performs channel estimation, based on the signal sequences S2 outputted from the FFT unit 1132. In the present embodiment, since each subcarrier includes the known symbol SP (preamble) as described above, the channel estimator 1150 calculates channel estimation information H^[k] in accordance with (Expression 1). Specifically, the channel estimator 1150 calculates the channel estimation information H^[k] by using least square (LS) estimation for each of the subcarriers.

[Formula 1]

$$\hat{H}[k] = R[k]/S[k]$$

$$\cdots \quad \text{(Expression 1)}$$

Here, k is a subcarrier index, R[k] is a received signal sequence of a subcarrier k, and S[k] is a known symbol (preamble) of the subcarrier k.

The channel estimator 1150 outputs the calculated channel estimation information H^[k] to the channel equalizer 1133. The channel equalizer 1133 compensates for the distortion in the channel of the radio signal RS by dividing the signal sequence (data part) of each of the subcarriers by the calculated channel estimation information H^[k].

The channel estimation information here has an influence of noise N as shown in (Expression 2). Note that H[k] indicates true channel characteristics.

[Formula 2]

$$R[k] = H[k] * S[k] + N$$

$\cdots$ (Expression 2)

Suppose a case where, in order for the SNR estimation not to be influenced by frequency-selective fading, the known symbol is equalized based on the average and dispersion of the signal sequences (data part) equalized using the calculated channel estimation information. In this case, the equalization result inevitably becomes S[k]. In other words, dispersion of amplitude or phase caused by the noise N cannot be detected. Accordingly, accurate SNR estimation cannot be done using the method described in Patent Literature 1.

The frequency-domain/time-domain converter 1160 re-converts each channel estimation information H^[k] outputted from the channel estimator 1150 into a signal sequence S3 being a signal sequence in time domain (a time-domain signal sequence). In the present embodiment, the frequency-domain/time-domain converter 1160 constitutes a re-converter.

Specifically, the frequency-domain/time-domain converter 1160 performs inverse Fourier transform (IFFT) on each channel estimation information H^[k], and transmits the signal sequences S3. In other words, the frequency-domain/time-domain converter 1160 calculates an impulse response h^[i] of the channel of the radio signal RS, as the signal sequence S3. The impulse response h^[i] of the channel of the radio signal RS is what the channel estimation information H^[k] is indicated in time domain.

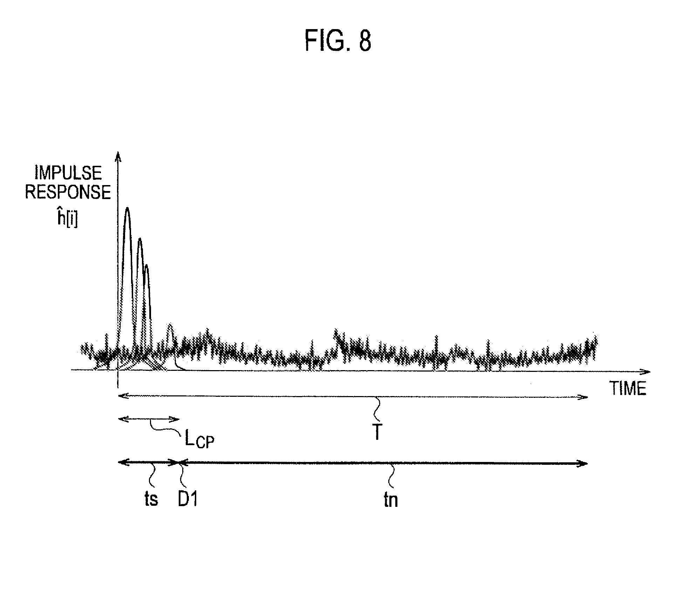

Accordingly, as Fig. 8 shows, the signal sequence in time domain obtained from the channel estimation information H^[k] looks like a signal sequence typified by a delay profile, and energy is thought to concentrate on a front part of a waveform on a time axis.

Further, since the channel estimation information H^[k] is calculated using the least square estimation, the impulse response h^[i] inherently includes noise. As Fig. 8 shows, the noise is thought to be additive white Gaussian noise (AWGN) or white noise. Further, the noise is thought to be distributed equally in a total time range T in a total frequency band.

The time-domain SNR estimator 1170 estimates an SNR of the radio signal RS, based on the signal sequences S3, namely, the impulse responses h^[i] outputted from the frequency-domain/time-domain converter 1160.

Specifically, the time-domain SNR estimator 1170 divides the total time range T including the impulse responses h^[i] obtained by the re-conversion by the frequency-domain/time-domain converter 1160, into a time range ts (a first time range) and a time range tn (a second time range tn). The time range ts includes a signal component whose amplitude of the impulse response h^[i] exceeds a predetermined threshold, and the time range tn is a time range other than the time range ts, namely, is where a noise component is dominant. In the present embodiment, the time-domain SNR estimator 170 constitutes a divider.

In the present embodiment, the time-domain SNR estimator 1170 determines a division position D1 between the time range ts and the time range tn, based on a time length of the guard interval, specifically, a cyclic-prefix length LCP shown in Fig. 8.

Here, the total time range T, the time range ts and the time range tn have a relationship shown in (Expression 3), where CP[%] represents the percentage of the cyclic prefixes CP given to the respective data symbols SD, W represents a total power in time domain, and a Na represents a power in a period other than the cyclic-prefix length LCP.

[Formula 3]

$$T : t_s : t_n = 100 : CP : (100 - CP)$$

$\cdots$ (Expression 3)

Further, a FFT time length (FFT Size), the total time range T, and the percentage of the cyclic prefixes CP have a relationship shown in (Expression 4).

[Formula 4]

$$0 \leq T < FFT\ Size,$$
$$0 \leq t_s < FFT\ Size \times CP/100,$$
$$FFT\ Size \times CP/100 \leq t_n < FFT\ Size$$

$\cdots$ (Expression 4)

Accordingly, an SNR can be estimated using (Expression 5) and (Expression 6).

[Formula 5]

$$W = \sum_{i=0}^{FFT\ Size-1} \left\{ \mathrm{Re}(h[i])^2 + \mathrm{Im}(h[i])^2 \right\},$$

$$Na = \sum_{i=FFT\ Size*CP/100}^{FFT\ Size-1} \left\{ \mathrm{Re}(h[i])^2 + \mathrm{Im}(h[i])^2 \right\}$$

$\cdots$ (Expression 5)

[Formula 6]

$$SNR = \frac{W - Na/(1 - CP/100)}{Na/(1 - CP/100)}$$

$\cdots$ (Expression 6)

Note that the signal sequence is processed as a complex number, and Re and Im indicate a real part and an imaginary part, respectively. Moreover, in the present embodiment, the noise power N is calculated by Na/(1-CP/100).

Specifically, the time-domain SNR estimator 1170 calculates a signal power (W-Na) of the radio signal RS, based on the signal sequence S3 (impulse responses h^[i]) included in the time range ts. Further, the time-domain SNR estimator 1170 calculates a noise power (Na), based on the signal sequence S3 included in the time range tn. Thereby, the SNR of the radio signal RS is estimated. In the present embodiment, the time-domain SNR estimator 1170 constitutes an SNR estimator.

For example, when the number of FFT points is 1,024 and the percentage of the cyclic prefixes CP is 12.5%, the conditions are as shown in (Expression 7), and therefore W and Na are calculated using (Expression 8).

[Formula 7]

$$0 \leq T < 1024, 0 \leq t_a < 128, 128 \leq t_n < 1024 \qquad \cdots \text{(Expression 7)}$$

[Formula 8]

$$W = \sum_{i=0}^{1023} \left\{ \mathrm{Re}(h[i])^2 + \mathrm{Im}(h[i])^2 \right\},$$

$$Na = \sum_{i=128}^{1023} \left\{ \mathrm{Re}(h[i])^2 + \mathrm{Im}(h[i])^2 \right\} \qquad \cdots \text{(Expression 8)}$$

The time-domain SNR estimator 1170 assigns the calculated W and Na to (Expression 9), and thus calculates an SNR.
[Formula 9]

$$SNR = \frac{W - Na/(0.875)}{Na/(0.875)} \qquad \cdots \text{(Expression 9)}$$

(3) Operation of Radio Communication Device

Next, an operation of the radio base station 1100 constituting a radio communication device in the present embodiment is described. Specifically, a description is given of an operation performed by the radio base station 1100 to estimate an SNR of the radio signal RS.

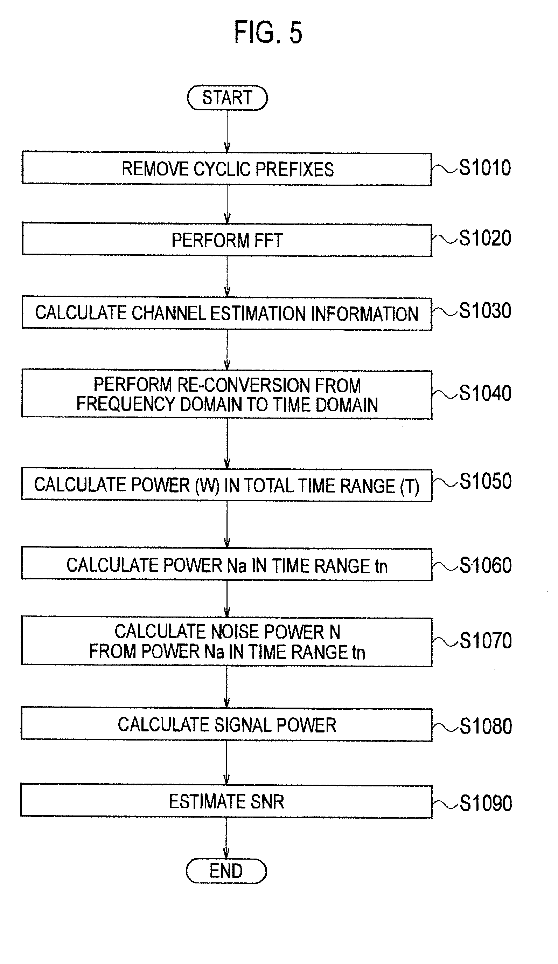

Fig. 5 is a flowchart showing the operation performed by the radio base station 1100 according to the present embodiment to estimate an SNR of the radio signal RS. As Fig. 5 shows, in Step S1010, the radio base station 1100 removes cyclic prefixes CP included in a radio signal RS received from the radio communication terminal 1200.
In Step S1020, the radio base station 1100 performs FFT on each signal sequence obtained after removing the cyclic prefixes CP.
In Step S1030, the radio base station 1100 calculates channel estimation information H^[k] by using the least square (LS) estimation. Specifically, the radio base station 1100 calculates the channel estimation information H^[k] in accordance with (Expression 1).
In Step S1040, the radio base station 1100 re-converts each channel estimation information H^[k] thus calculated, namely, a signal sequence in frequency domain, into a signal sequence in time domain. Specifically, the radio base station 1100 calculates an impulse response h^[i] of the channel of the radio signal RS.
In Step S1050, the radio base station 1100 calculates a total power W in the total time range T including the impulse responses h^[i].
In Step S1060, the radio base station 1100 calculates a power Na in the time range tn.
In Step S1070, the radio base station 1100 calculates a noise power N, based on the power Na in the time range tn.

Specifically, the radio base station 1100 calculates the total power W and the power Na based on (Expression 5). Moreover, the radio base station 1100 calculates the noise power N by Na/(1-CP/100).

In Step S1080, the radio base station 1100 calculates a signal power of the radio signal RS. Specifically, the radio base station 1100 calculates the signal power by subtracting the power Na from the total power W, as shown in (Expression 6).

In Step S1090, the radio base station 1100 estimates an SNR by using the signal power and power Na thus calculated. Specifically, the radio base station 1100 calculates the SNR of the radio signal RS by using (Expression 6).

(4) Advantageous Effects

According to the radio base station 1100, an SNR of the radio signal RS is estimated based on the signal sequences S3 not in frequency domain but in time domain, namely, the impulse responses h^[i]. This can prevent low accuracy in estimating an SNR even in a radio communication system having a long symbol length and using a wide band, particularly, in the radio communication system 1001 employing a multi-carrier scheme.

In other words, the radio base station 1100 allows an SNR to be estimated with improved accuracy when the SNR of a radio signal RS is estimated based on the known symbol SP (preamble).

In the present embodiment, the division position D1 between the time range ts and the time range tn is determined based on a time length of the guard interval, namely, the cyclic-prefix length LCP. In general, an impulse response h^ [i] whose amplitude exceeds a predetermined threshold often falls within the cyclic-prefix length LCP. Accordingly, the division position D1 can be determined without complicated calculation.

[Second Embodiment]

Next, the second embodiment of the present invention is described. In the present embodiment, the division position D1 between the time range ts that includes a signal component whose amplitude of the impulse response h^[i] exceeds a predetermined threshold and the time range tn in which a noise component is dominant is dynamically changed according to a multipath state of the radio signal RS.

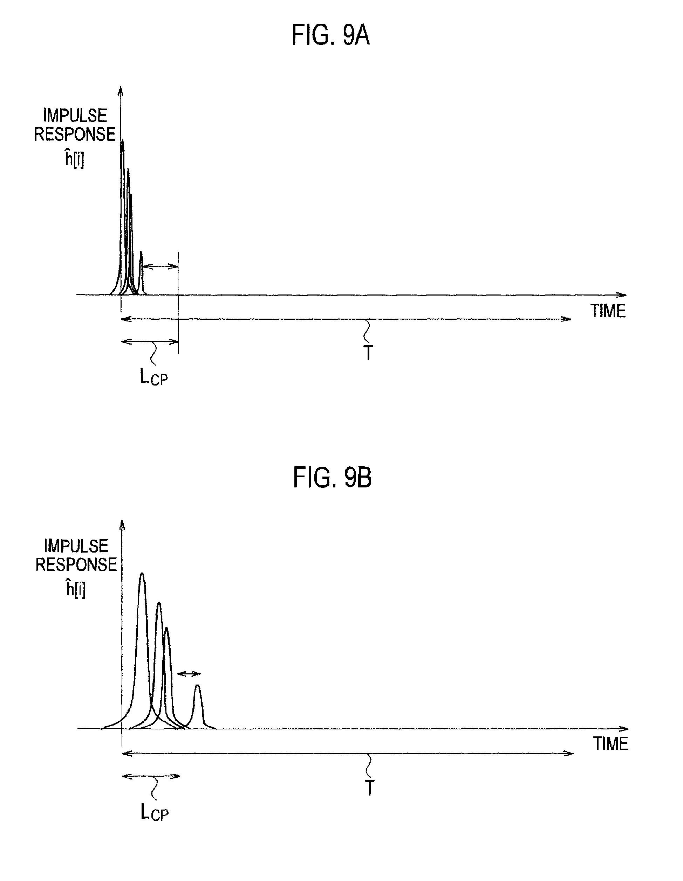

Specifically, in an actual environment, time until arrival of a delay wave of the radio signal RS is not always comparable to the cyclic-prefix length LCP. The delay wave may concentrate in a part short of the cyclic-prefix length LCP as shown in part (a) of Fig. 9, and may exist beyond the cyclic-prefix length LCP as shown in part (b) of Fig. 9. Accordingly, in the present embodiment, accuracy in estimating a noise power is improved by changing the division position D1 (see Fig. 8) between the time range ts and the time range tn, based on an arrival timing (a reception timing) of the delay wave. For example, when time until arrival of the delay wave is shorter than the cyclic-prefix length LCP, the time range tn is increased to improve the noise-power estimation accuracy.

(1) Functional Block Configuration of Radio Communication Device

A radio base station 1100 (radio communication device) according to the present embodiment has the same functional block configuration as the radio base station 1100 according to the first embodiment shown in Fig. 2, except for part of the synchronization processor 1110 and part of the time-domain SNR estimator 1170. Note that parts different from those of the first embodiment will be mainly described below, and descriptions for parts similar to those of the first embodiment will be appropriately omitted.

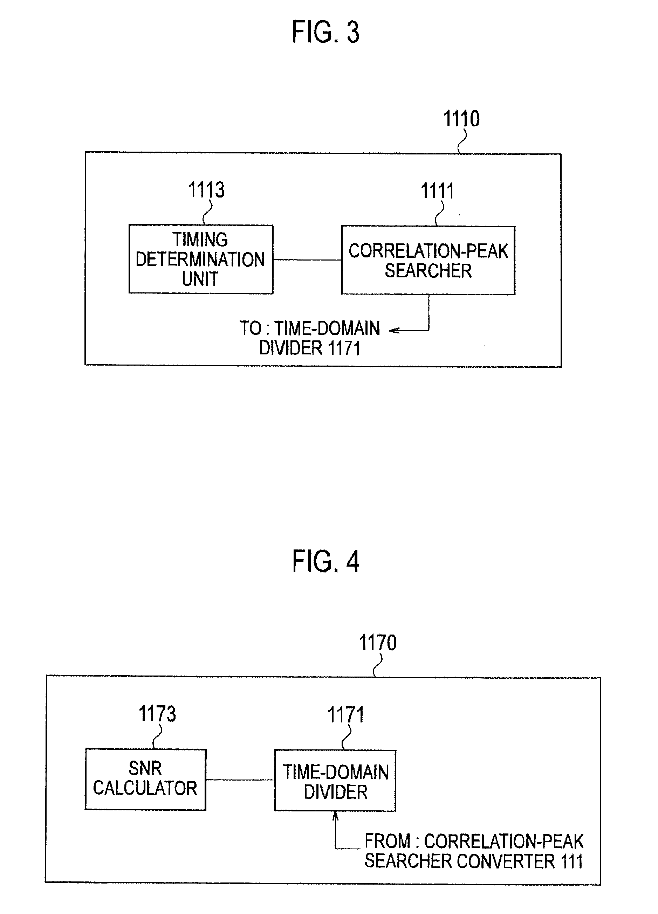

Fig. 3 is a diagram showing a functional block configuration of a synchronization processor 1110 according to the present embodiment. Further, Fig. 4 is a diagram showing a functional block configuration of a time-domain SNR estimator 1170 according to the present embodiment.

As Fig. 3 shows, the synchronization processor 1110 according to the present embodiment includes a correlation peak searcher 1111 and a timing determination unit 1113. Further, as Fig. 4 shows, the time-domain SNR estimator 1170 according to the present embodiment includes a time domain divider 1171 and an SNR calculator 1173.

For multipath detection for a radio signal RS, the correlation peak searcher 1111 obtains a correlation between the radio signal RS and a known signal (known symbol SP), and searches for a peak part where the degree of correlation is high. Based on a result of the search, the correlation peak searcher 1111 measures a reception timing of a delay wave arriving at the radio base station 1100 latest, and outputs the thus-measured arrival timing to the time domain divider 1171.

The timing determination unit 1113 determines a timing to process signal sequences S1 forming the radio signal RS received from the radio communication terminal 1200.

According to the reception timing of the delay wave arriving latest (latest incoming wave timing) outputted from the correlation peak searcher 1111, the time domain divider 1171 calculates a division ratio of the timing range ts and the timing range tn, namely, the division position D1 between the timing range ts and the timing range tn. Specifically, the time domain divider 1171 calculates the division ratio of the timing range ts and the timing range tn by using (Expression 10).

[Formula 10]

$$t_s : t_n = CP' : 1 - CP'$$

$$CP' = \frac{\text{latest incoming wave timing}}{\text{1 OFDM symbol}}$$

$$\cdots \quad \text{(Expression 10)}$$

The SNR calculator 1173 calculates an SNR in the same way as the first embodiment, based on the division ratio of the timing range ts and the timing range tn, namely, the division position D1 between the timing range ts and the timing range tn, calculated by the time domain divider 1171.

(2) Operation of Radio Communication Device

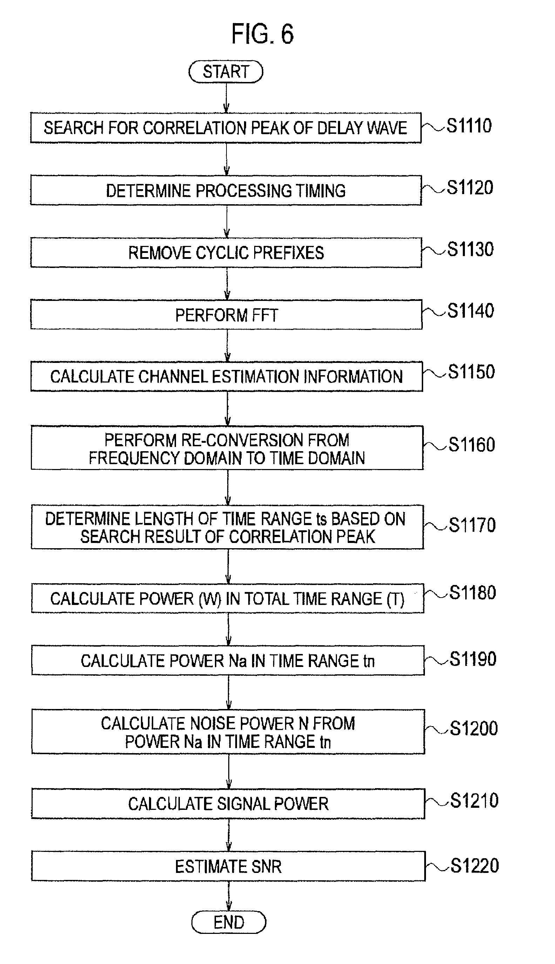

Fig. 6 is a flowchart of an operation performed by the radio base station 1100 according to the present embodiment to estimate an SNR of a ratio signal RS. As Fig. 6 shows, in Step S1110, the radio base station 1100 obtains a correlation between the radio signal RS and a known signal (known symbol SP), and searches for a peak part where the degree of correlation is high. Based on a result of the search, the radio base station 1100 measures a reception timing of a delay wave arriving at the radio base station 1100 latest.

In Step S1120, the radio base station 1100 determines a timing to process signal sequences S1 included in respective subcarriers forming the radio signal RS.

Processing in Steps S1130 to S1160 is the same as that in Steps S1010 to S1040 according to the first embodiment.

In Step S1170, the radio base station 1100 determines the length of the time range ts, based on the result of the search for the peak part in Step S1110. Specifically, using (Expression 10), the radio base station 1100 calculates a division ratio of the time range ts and the time range tn.

Processing in Steps S1180 to S1220 is the same as that in Steps S1050 to S1090 according to the first embodiment.

(3) Advantageous Effects

With the radio base station 1100 according to the present embodiment, the division position D1 between the time range ts and the time range tn is determined based on a reception timing of a delay wave of a radio signal RS. Accordingly, a proper division position D1 can be set even when time until arrival of the delay wave of the radio signal RS is not comparable to the cyclic-prefix length LCP. In other words, the radio base station 1100 according to the present embodiment can estimate an SNR accurately even when time until arrival of the delay wave of the radio signal RS is not comparable to the cyclic-prefix length LCP.

[Third Embodiment]

Next, the third embodiment of the present invention is described. Specifically, descriptions are given as to (1) an overall schematic configuration of a radio communication system, (2) a functional block configuration of a radio communication device, (3) an operation of the radio communication device, and (4) advantageous effects.

(1) Overall Configuration of Radio Communication System

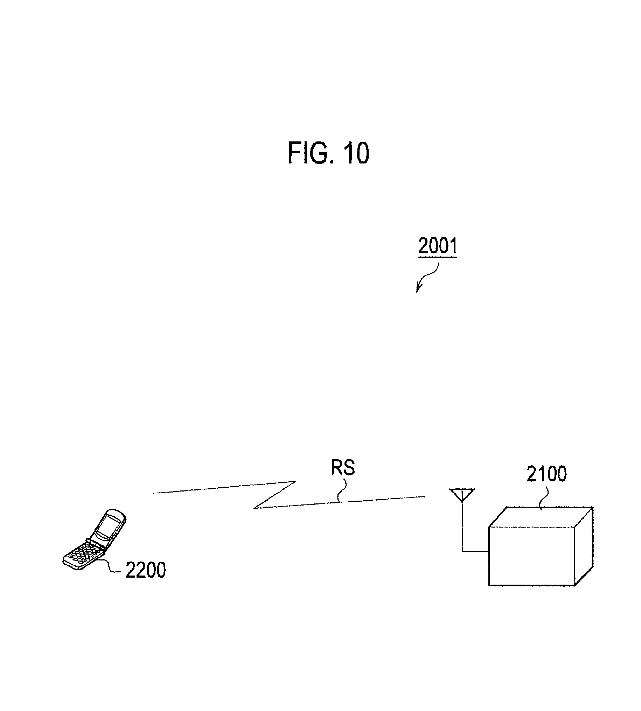

Fig. 10 is a diagram showing an overall schematic configuration of a radio communication system 2001 according to the present embodiment. As Fig. 10 shows, the radio communication system 2001 includes a radio base station 2100 and a radio communication terminal 2200. Note that the numbers of the radio base stations 2100 and the radio communication terminals 2200 included in the radio communication system 2001 are not limited to what is shown.

The radio communication system 2001 employs a so-called multi-carrier scheme, in which a radio signal RS is formed of multiple subcarriers. Specifically, the radio communication system 2001 employs an orthogonal frequency division multiplexing (OFDM) scheme. Accordingly, the radio signal RS is formed according to OFDM.

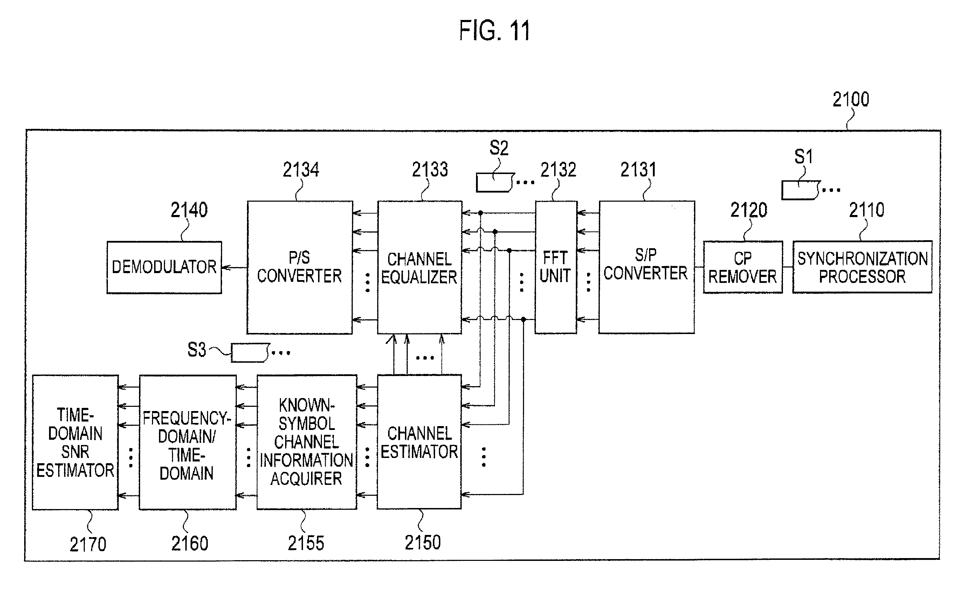

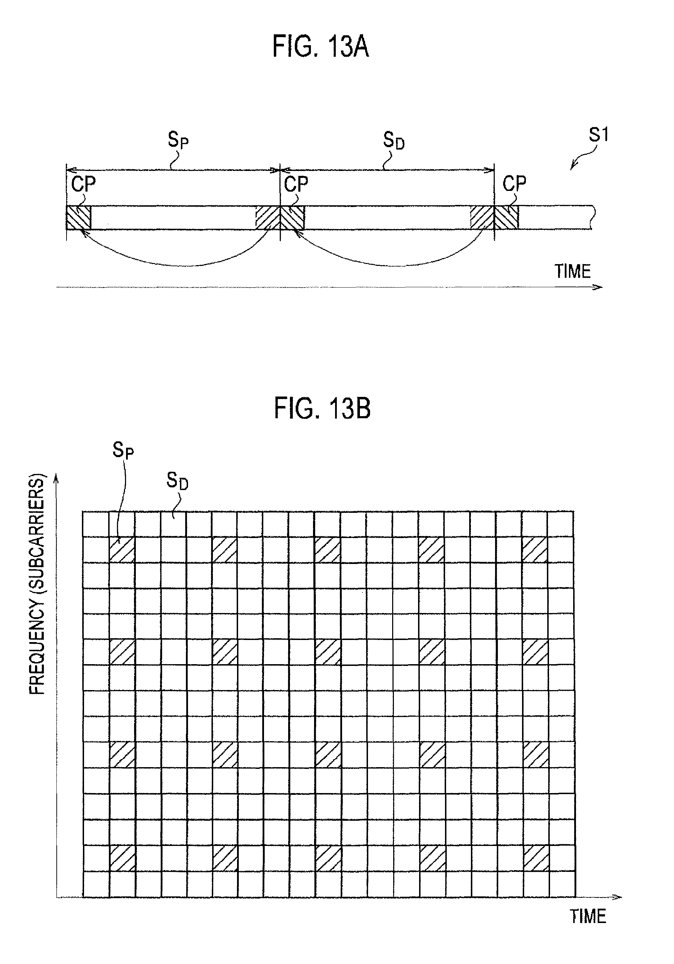

The radio base station 2100 transmits and receives the radio signal RS to and from the radio communication terminal 2200. In the present embodiment, the radio base station 2100 constitutes a radio communication device. The radio base station 2100 receives a temporally-discrete radio signal RS from the radio communication terminal 2200. The radio base station 2100 converts the received radio signal RS into signal sequences S2 in frequency domain (not shown in Fig. 10; see Fig. 11). Based on a known signal included in the radio signal RS, specifically, a known symbol SP (not shown in Fig. 10; see parts (a) and (b) of Fig. 13), the radio base station 2100 calculates channel estimation information indicating estimation of a state of a channel of the radio signal RS.

Like the radio base station 2100, the radio communication terminal 2200 converts a radio signal RS received from the radio base station 2100 into signal sequences in frequency domain, and calculates channel estimation information for the radio signal RS, based on a known symbol included in the radio signal RS.

(2) Functional Block Configuration of Radio Communication Device

Fig. 11 is a diagram showing a functional block configuration of the radio base station 2100 constituting the radio communication device in the present embodiment. As Fig. 11 shows, the radio base station 2100 includes a synchronization processor 2110, a CP remover 2120, an S/P converter 2131, an FFT unit 2132, a channel equalizer 2133, a P/S converter 2134, a demodulator 2140, a channel estimator 2150, a known-symbol channel information acquirer 2155, a frequency-domain/time-domain converter 2160, and a time-domain SNR estimator 2170.

The synchronization processor 2110 performs processing for synchronizing signal sequences S1 included in respective subcarriers forming a radio signal RS received from the radio communication terminal 2200.

Parts (a) and (b) of Fig. 13 show a configuration example of the signal sequence S1. The radio signal RS is, specifically, the signal sequences S1 are, formed of multiple subcarriers using different frequencies. Each signal sequence S1 includes known symbols SP and data symbols SD.

The multiple known symbols SP are arranged at a predetermined interval in a frequency-axis direction and in a temporal-axis direction. In the present embodiment, the known symbol SP is a so-called pilot symbol, the set value of which, such as amplitude and phase, is known to the radio communication terminal 2200 (transmitter side) and to the radio base station 2100 (receiver side).

In the present embodiment, as part (b) of Fig. 13 shows, known symbols SP are arranged every four subcarriers. In other words, a predetermined interval is equal to four subcarriers, and the predetermined intervals between the known symbols SP are equal to each other.

In addition, each signal sequence S1 includes cyclic prefixes CP. Each cyclic prefix CP is a guard interval for preventing interference between symbols. The cyclic prefix CP is inserted between the data symbols SD in order to absorb the influence that the radio signal RS has due to multipath. The cyclic prefix CP is a copy of a portion of a last part of a transmission symbol (any one of the known symbol SP and the data symbol SD) to which that cyclic prefix CP is to be given.

The CP remover 2120 removes the cyclic prefix CP included in the signal sequences S1 outputted from the synchronization processor 2110.

The S/P converter 2131 performs serial-to-parallel conversion on the signal sequences S1 outputted from the CP remover 2120. FFT unit 2132 performs fast Fourier transform (FFT) on each of the signal sequences outputted from the S/P converter 2131. By performing FFT on the signal sequences, the FFT unit 2132 outputs signal sequences S2 in frequency domain to the channel equalizer 2133 and to the channel estimator 2150.

The channel equalizer 2133 performs channel equalization on the signal sequences S2 outputted from the FFT unit 2132. Specifically, based on control by the channel estimator 2150, the channel equalizer 2133 corrects the signal sequences S2 having distortion in its phase and amplitude due to fading influence in the channel of the radio signal RS, and thereby reproduces the signal sequences transmitted from the radio communication terminal 2200.

The P/S converter 2134 performs parallel-to-serial conversion on the corrected signal sequences S2 outputted from the channel equalizer 2133. By using the signal sequences outputted from the P/S converter 2134, the demodulator 2140 performs demodulation processing, specifically, reproduces the signal sequences transmitted from the radio communication terminal 2200.

The channel estimator 2150 performs channel estimation, based on the signal sequences S2 outputted from the FFT unit 2132. In the present embodiment, the channel estimator 2150 calculates channel estimation information H^[k] in the known symbol SP in accordance with (Expression 1). Specifically, the channel estimator 2150 calculates the channel estimation information H^[k] in the known symbol SP by using least square (LS) estimation for each of the subcarriers.

The channel estimator 2150 outputs the calculated channel estimation information H^[k] to the channel equalizer 2133. The channel equalizer 2133 compensates for the distortion in the channel of the radio signal RS by dividing the signal sequence (data part) of each of the subcarriers by the calculated channel estimation information H^[k].

The channel estimation information here has an influence of noise N as shown in (Expression 2).

Suppose a case where, in order for the SNR estimation not to be influenced by frequency-selective fading, the known symbol is equalized based on the average and dispersion of the signal sequences (data part) equalized using the calculated channel estimation information. In this case, the equalization result inevitably becomes S[k]. In other words, dispersion of amplitude or phase caused by the noise N cannot be detected. Accordingly, accurate SNR estimation cannot be done using the method described in Patent Literature 1.

The known-symbol channel information acquirer 2155 acquires channel information on the known symbol SP (see parts (a) and (b) of Fig. 13). Specifically, the known-symbol channel information acquirer 2155 acquires a frequency, a code used, and the like of the known symbols SP arranged every four subcarriers.

The frequency-domain/time-domain converter 2160 re-converts each channel estimation information H^[k] outputted from the known-symbol channel information acquirer 2155 into a signal sequence S3 being a signal sequence in time domain (a time-domain signal sequence). In the present embodiment, the frequency-domain/time-domain converter 2160 constitutes a re-converter.

The frequency-domain/time-domain converter 2160 converts only the channel estimation information H^[k] in the known symbol SP into the signal sequence S3, based on the channel estimation information H^[k] outputted from the known-symbol channel information acquirer 2155.

Specifically, the frequency-domain/time-domain converter 2160 performs inverse Fourier transform (IFFT) on each channel estimation information H^[k], and transmits the signal sequences S3. In other words, the frequency-domain/time-domain converter 2160 calculates an impulse response h^[i] of the channel of the radio signal RS, as the signal sequence S3. The impulse response h^[i] of the channel of the radio signal RS is what the channel estimation information H^[k] is indicated in time domain frequency domain.

Accordingly, as Fig. 8 shows, the signal sequence in time domain obtained from the channel estimation information H^[k] looks like a signal sequence typified by a delay profile, and energy is thought to concentrate on a front part of a waveform on a time axis.

Further, since the channel estimation information H^[k] is calculated using the least square estimation, the impulse response h^[i] inherently includes noise. As Fig. 8 shows, the noise is thought to be additive white Gaussian noise (AWGN) or white noise. Further, the noise is thought to be distributed equally in a total time range T in a total frequency band.

The time-domain SNR estimator 2170 estimates an SNR of the radio signal RS, based on the signal sequences S3, namely, the impulse responses h^[i] outputted from the frequency-domain/time-domain converter 2160.

Specifically, the time-domain SNR estimator 2170 divides the total time range T including the impulse responses h^[i] obtained by the re-conversion by the frequency-domain/time-domain converter 2160, into a time range ts (a first time range) and a time range tn (a second time range tn). The time range ts includes a signal component whose amplitude of the impulse response h^[i] exceeds a predetermined threshold, and the time range tn is a time range other than the time range ts, namely, is where a noise component is dominant. In the present embodiment, the time-domain SNR estimator 2170 constitutes a divider.

In the present embodiment, the time-domain SNR estimator 2170 determines a division position D1 between the time range ts and the time range tn, based on the cyclic-prefix length LCP shown in Fig. 8.

Here, the total time range T, the time range ts and the time range tn have a relationship shown in (Expression 3), where CP[%] represents the percentage of the cyclic prefixes CP given to the respective data symbols SD, W represents a total power in time domain, and a Na represents a power in a period other than the cyclic-prefix length LCP.

Further, a FFT time length (FFT Size), the total time range T, and the percentage of the cyclic prefixes CP have a relationship shown in (Expression 4).

Accordingly, an SNR can be estimated using (Expression 5) and (Expression 6).

Note that, in the present embodiment, the noise power N is calculated by Na/(1-CP/100).

Specifically, the time-domain SNR estimator 2170 calculates a signal power (W-Na) of the radio signal RS, based on the signal sequences S3 (impulse responses h^[i]) included in the time range ts. Further, the time-domain SNR estimator 2170 calculates a noise power (Na), based on the signal sequences S3 included in the time range tn. Thereby, the SNR of the radio signal RS is estimated. In the present embodiment, the time-domain SNR estimator 2170 constitutes an SNR estimator.

In the present embodiment, only the channel estimation information H^[k] corresponding to the known symbols Sp arranged every four subcarriers, namely, at equal intervals is extracted, and only the extracted channel estimation information H^[k] is converted into the signal sequence in time domain. For example, when the number of the subcarriers is 1,024 and the known symbols SP are arranged every four subcarriers, 256-point conversion is performed.

An SNR is estimated for the signal sequences (256 pieces of data) obtained by performing the 256-point conversion. Although the relationship shown in (Expression 3) is true in this case as well, (Expression 4) is expressed as (Expression 4') when the predetermined interval between the known symbols SP is n.

[Formula 11]

$$0 \le T < FFT\ Size\ /\ n,$$

$$0 \le t_s < FFT\ Size \times CP\ /100\ /\ n,$$

$$FFT\ Size \times CP\ /100\ /\ n \le t_n < FFT\ Size\ /\ n$$

$$\cdots \text{(Expression 4')}$$

When the number of FFT points is 256 and the percentage of the cyclic prefixes CP is 12. 5%, W and Na are calculated using (Expression 11).

[Formula 12]

$$W = \sum_{i=0}^{255} \left\{ \mathrm{Re}(h[i])^2 + \mathrm{Im}(h[i])^2 \right\}$$

$$Na = \sum_{i=32}^{255} \left\{ \mathrm{Re}(h[i])^2 + \mathrm{Im}(h[i])^2 \right\}$$

$$\cdots \text{(Expression 11)}$$

The time-domain SNR estimator 2170 assigns the calculated W and Na to (Expression 12), and thus calculates an SNR.

[Formula 13]

$$SNR = \frac{W - Na/(0.875)}{Na/(0.875)}$$

$$\cdots \text{(Expression 12)}$$

(3) Operation of Radio Communication Device

Next, an operation of the radio base station 2100 constituting a radio communication device in the present embodiment is described. Specifically, a description is given of an operation performed by the radio base station 2100 to estimate an SNR of the radio signal RS.

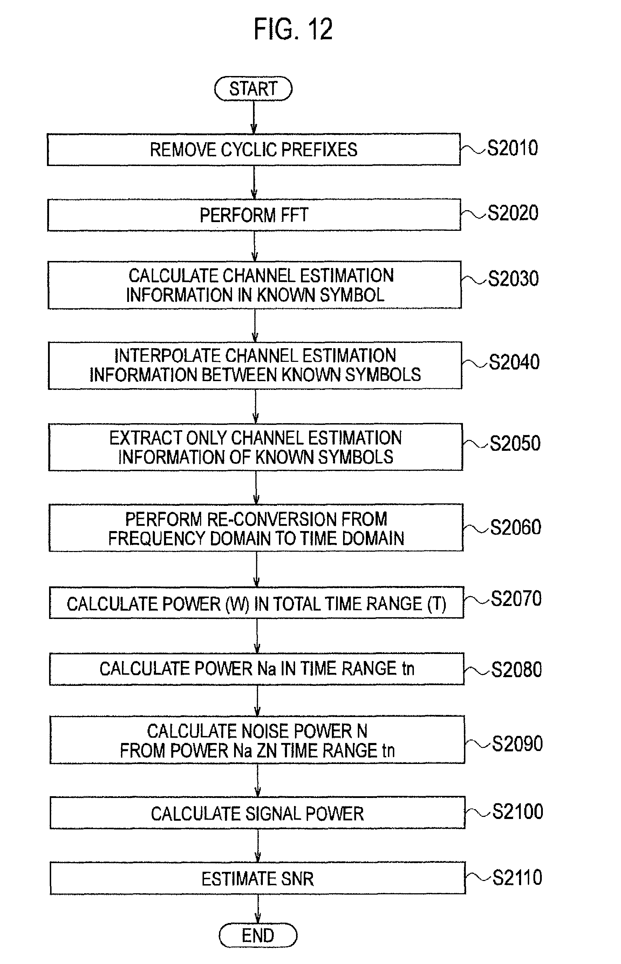

Fig. 12 is a flowchart showing the operation performed by the radio base station 2100 according to the present embodiment to estimate an SNR of the radio signal RS. As Fig. 12 shows, in Step S2010, the radio base station 2100 removes cyclic prefixes CP included in a radio signal RS received from the radio communication terminal 2200.

In Step S2020, the radio base station 2100 performs FFT on each signal sequence obtained after removing the cyclic prefixes CP.

In Step S2030, the radio base station 2100 calculates channel estimation information H^[k] by using the least square (LS) estimation. Specifically, the radio base station 2100 calculates the channel estimation information H^[k] in the known symbol SP in accordance with (Expression 1).

In Step S2040, the radio base station 2100 interpolates the channel estimation information H^[k] between the known symbols SP by using the calculated channel estimation information H^[k] in the known symbol SP. Specifically, using linear interpolation, the radio base station 2100 interpolates the channel estimation information H^[k] of the data symbols SD arranged between the known symbols SP.

In Step S2050, the radio base station 2100 extracts only the channel estimation information H^[k] of the known symbols SP from among the channel estimation information H^[k] calculated.

In Step S2060, the radio base station 2100 re-converts the extracted channel estimation information H^[k] of the known symbols SP, namely, the signal sequences in frequency domain, into signal sequences in time domain. Specifically, the radio base station 2100 calculates the impulse response h^[i] of the channel of the radio signal RS.

In Step S2070, the radio base station 2100 calculates a total power W in the total time range T including the impulse response h^[i].

In Step S2080, the radio base station 2100 calculates a power Na in the time range tn.

The radio base station 2100 calculates a noise power N, based on the power Na in the time range tn.

Specifically, the radio base station 2100 calculates the total power W and the power Na based on (Expression 11). Moreover, the radio base station 2100 calculates the noise power N by Na/(1-CP/100).

In Step S2100, the radio base station 2100 calculates a signal power of the radio signal RS. Specifically, the radio base station 2100 calculates the signal power by subtracting the power Na from the total power W, as shown in (Expression 12).

In Step S2110, the radio base station 2100 estimates an SNR by using the signal power and power Na thus calculated. Specifically, the radio base station 2100 calculates the SNR of the radio signal RS by using (Expression 12).

(4) Advantageous Effects

According to the radio base station 2100, an SNR of the radio signal RS is estimated based on the signal sequences S3 not in frequency domain but in time domain, namely, the impulse responses h^[i]. Further, only the channel estimation information H^[k] in the known symbols SP (preamble) is converted into time-domain signal sequences. Accordingly, even when the known symbols SP are arranged at a predetermined interval in the frequency-axis direction or in the temporal-axis direction, a problem is prevented in which a noise power is smoothed out by performing linear interpolation on the channel estimation information H^[k] between the known symbols SP. Thus, the radio base station 2100 can prevent low accuracy in estimating an SNR.

[Other Embodiments]

As described above, the present invention has been disclosed by using the first embodiment, the second embodiment, and the third embodiment of the present invention. However, it should not be understood that the description and drawings which constitute part of this disclosure limit the present invention. From this disclosure, various alternative embodiments, examples, and operation techniques will be easily found by those skilled in the art.

For example, although an SNR is estimated as a reception quality of a radio signal RS in the second embodiment described above, a noise power of the radio signal RS may be calculated as the reception quality, instead of the SNR.

Specifically, the time-domain SNR estimator 1170 (a noise-power calculator) of the radio base station 1100 calculates the noise power, instead of the SNR, of the radio signal RS, based on the signal sequences S3 (time-domain signal sequences) included in the time range tn.

In the first embodiment and the second embodiment described above, the frequency-domain/time-domain converter 1160 performs IFFT on the channel estimation information H^[k]. However, discrete cosine transform (DCT) or the like may be used instead of IFFT.

The above-described radio communication system 1001 employs the OFDM scheme, but the radio communication system 1001 does not necessarily have to employ the OFDM scheme. Further, the present invention may employ a radio communication system using a single-carrier scheme.

In the above descriptions of the first embodiment and the second embodiment, the radio base station 1100 constitutes the radio communication device according to the present invention. Instead, the radio communication terminal 1200 may of course constitute the radio communication device according to the present invention.

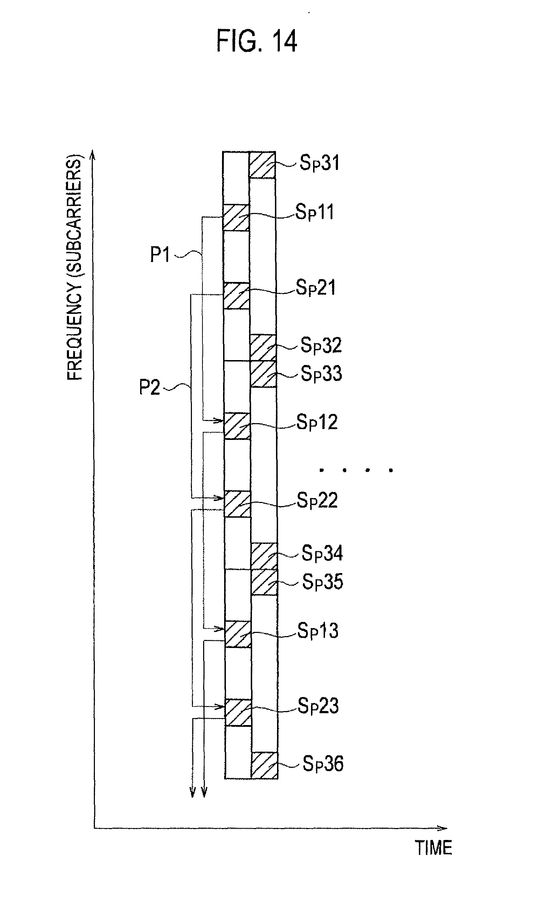

For example, although the known symbols SP are arranged at equal intervals in the frequency-axis direction and the temporal-axis direction in the above third embodiment, the known symbols SP of the signal sequence may be positioned as shown in Fig. 14 for example.

Fig. 14 shows a configuration example of (part of) signal sequences according to a modification of the third embodiment of the present invention. As Fig. 14 shows, in signal sequences S4, known symbols SP 11 to SP 13, SP 21 to 23, and SP 31 to SP 36 are arranged. Specifically, in the signal sequences S4, multiple known symbols form multiple intervals between the known symbols. For example, an interval between the known symbols SP 11 and SP 12 (a first interval) is different from an interval between the known symbols SP 31 and SP 32 (a second interval).

In addition, the arrangement pattern of the known symbols includes a pattern P1 (a first pattern) and a pattern P2 (a second pattern). The pattern P1 and the pattern P2 overlap in the frequency-axis direction. Specifically, a frequency band occupied by the pattern P1 formed by the known symbols SP 11, SP 12, and SP 13 overlaps with a frequency band occupied by the pattern P2 formed by the known symbols SP 21, SP 22, and SP 23.

With such arrangement of the known symbols, the channel estimation information H^[k] can be calculated for each of the pattern P1 and the pattern P2. Accordingly, SNR estimation accuracy can be improved further.

Moreover, the known symbols SP 31, SP 32, and SP 33 may form a pattern having a known-symbol interval different from that in the pattern P1 and the pattern P2.

Although an SNR is estimated as a reception quality of a radio signal RS in the third embodiment described above, a noise power of the radio signal RS may be calculated as the reception quality, instead of the SNR.

Specifically, the time-domain SNR estimator 2170 (a noise-power calculator) of the radio base station 2100 calculates the noise power, instead of the SNR, of the radio signal RS, based on the signal sequences S3 (time domain signal sequences) included in the time range tn.

In the third embodiment described above, the frequency-domain/time-domain converter 2160 performs IFFT on the channel estimation information H^[k]. However, discrete cosine transform (DCT) or the like may be used instead of IFFT.

The above-described radio communication system 2001 employs the OFDM scheme, but the radio communication system 2001 does not necessarily have to employ the OFDM scheme. Further, the present invention may employ a radio communication system using a single-carrier scheme.

In the above description of the third embodiment, the radio base station 2100 constitutes the radio communication device according to the present invention. Instead, the radio communication terminal 2200 may of course constitute the radio communication device according to the present invention.

As described above, the present invention naturally includes various embodiments which are not described herein. Accordingly, the technical scope of the present invention should be determined only by the matters to define the invention in the scope of claims regarded as appropriate based on the description.

Note that the entire contents of Japan Patent Application Nos. 2007-255891 (filed on September 28, 2007) and 2007-256312 (filed on September 28, 2007) are incorporated herein by reference.

INDUSTRIAL APPLICABILITY

As described above, the radio communication device and the reception quality estimation method according to the present invention allow a reception quality of a radio signal to be estimated with improved accuracy when the reception quality of the radio signal is estimated based on a known signal, and particularly, when a multi-carrier scheme is employed, and therefore are useful in radio communications such as mobile communications.

**Claims**

1. A radio communication device that converts a received radio signal into a signal sequence in frequency domain, and calculates channel estimation information on the basis of a known signal included in the radio signal, the channel estimation information indicating estimation of a state of a channel of the radio signal, the radio communication device comprising:

a re-converter configured to re-convert the channel estimation information into a time-domain signal sequence which is a signal sequence in time domain;
a divider configured to divide a total time range including the time-domain signal sequence obtained by the re-conversion by the re-converter, into a first time range and a second time range, the first time range including a signal component whose amplitude of the time-domain signal sequence exceeds a predetermined threshold, the second time range being a time range other than the first time range; and
an SNR estimator configured to estimate a signal-to-noise ratio of the radio signal by calculating a signal power of the radio signal on the basis of the time-domain signal sequence included in the first time range, and by calculating a noise power on the basis of the time-domain signal sequence included in the second time range.

2. The radio communication device according to claim 1, wherein the divider determines a division position between the first time range and the second time range in accordance with a multipath state of the radio signal.

3. The radio communication device according to claim 2, wherein the divider determines the division position on the basis of a reception timing of a delay wave of the radio signal.

4. The radio communication device according to claim 1, wherein
the radio signal is formed according to an orthogonal frequency division multiplexing scheme, and includes a guard interval preventing interference between symbols, and
the divider determines a division position between the first time range and the second time range on the basis of a time length of the guard interval.

5. The radio communication device according to claim 1, wherein the re-converter converts only the channel estimation information in the known signal into the time-domain signal sequence.

6. The radio communication device according to claim 5, wherein
the radio signal is formed of a plurality of subcarriers using different frequency bands,
the radio signal includes a plurality of the known signals, and
the plurality of known signals are arranged at a predetermined interval in a frequency-axis direction.

7. The radio communication device according to claim 6, wherein
the plurality of known signals form a plurality of the predetermined intervals, and
the plurality of predetermined intervals are equal to each other.

8. The radio communication device according to claim 6, wherein
the plurality of known signals form a plurality of the predetermined intervals, and
the plurality of predetermined intervals include:

a first pattern in which an interval between the known signals is a first interval; and
a second pattern in which an interval between the known signals is a second interval.

9. The radio communication device according to claim 8, wherein the first pattern and the second pattern overlap each other in the frequency-axis direction.

10. The radio communication device according to any one of claims 8 and 9, wherein the interval between the known signals in the first pattern is different from the interval between the known signals in the second pattern.

11. A radio communication device that converts a received radio signal into a signal sequence in frequency domain, and calculates channel estimation information on the basis of a known signal included in the radio signal, the channel estimation information indicating estimation of a state of a channel of the radio signal, the radio communication device comprising:

a re-converter configured to re-convert the channel estimation information into a time-domain signal sequence which is a signal sequence in time domain;
a divider configured to divide a total time range including the time-domain signal sequence obtained by the re-conversion by the re-converter, into a first time range and a second time range, the first time range including a signal component whose amplitude of the time-domain signal sequence exceeds a predetermined threshold, the second time range being a time range other than the first time range; and
a noise-power calculator configured to calculate a noise power of the radio signal on the basis of the time-domain signal sequence included in the second time range, wherein
the divider determines a division position between the first time range and the second time range in accordance with a multipath state of the radio signal.

12. A radio communication device that converts a received radio signal into a signal sequence in frequency domain, and calculates channel estimation information on the basis of a known signal included in the radio signal, the channel estimation information indicating estimation of a state of a channel of the radio signal, the radio communication device comprising:

a re-converter configured to re-convert the channel estimation information into a time-domain signal sequence which is a signal sequence in time domain;

a divider configured to divide a time range including the time-domain signal sequence obtained by the re-conversion by the re-converter, into a first time range and a second time range, the first time range including a signal component whose amplitude of the time-domain signal sequence exceeds a predetermined threshold, the second time range being a time range other than the first time range; and

a noise-power calculator configured to calculate a noise power of the radio signal on the basis of the time-domain signal sequence included in the second time range, wherein

the re-converter converts only the channel estimation information in the known signal into the time-domain signal sequence.

13. A reception quality estimation method for a radio communication device that converts a received radio signal into a signal sequence in frequency domain, and calculates channel estimation information on the basis of a known signal included in the radio signal, the channel estimation information indicating estimation of a state of a channel of the radio signal, the reception quality estimation method comprising the steps of:

re-converting the channel estimation information into a time-domain signal sequence which is a signal sequence in time domain;

dividing a total time range including the time-domain signal sequence obtained by the re-conversion, into a first time range and a second time range, the first time range including a signal component whose amplitude of the time-domain signal sequence exceeds a predetermined threshold, the second time range being a time range other than the first time range; and

estimating a signal-to-noise ratio of the radio signal by calculating a signal power of the radio signal on the basis of the time-domain signal sequence included in the first time range, and by calculating a noise power on the basis of the time-domain signal sequence included in the second time range.

14. The reception quality estimation method according to claim 13, wherein, in the reconversion step, only the channel estimation information in the known signal is converted into the time-domain signal sequence.

15. A reception quality estimation method for a radio communication device that converts a received radio signal into a signal sequence in frequency domain, and calculates channel estimation information on the basis of a known signal included in the radio signal, the channel estimation information indicating estimation of a state of a channel of the radio signal, the reception quality estimation method comprising the steps of:

re-converting the channel estimation information into a time-domain signal sequence which is a signal sequence in time domain;

dividing a time range including the time-domain signal sequence obtained by the re-conversion, into a first time range and a second time range, the first time range including a signal component whose amplitude of the time-domain signal sequence exceeds a predetermined threshold, the second time range being a time range other than the first time range; and

calculating a noise power of the radio signal on the basis of the time-domain signal sequence included in the second time range, wherein

in the noise-power calculation step, a division position between the first time range and the second time range is determined in accordance with a multipath state of the radio signal.

16. A reception quality estimation method for a radio communication device that converts a received radio signal into a signal sequence in frequency domain, and calculates channel estimation information on the basis of a known signal included in the radio signal, the channel estimation information indicating estimation of a state of a channel of the radio signal, the reception quality estimation method comprising the steps of:

re-converting the channel estimation information into a time-domain signal sequence which is a signal sequence in time domain;

dividing a time range including the time-domain signal sequence obtained by the re-conversion, into a first time range and a second time range, the first time range including a signal component whose amplitude of the time-domain signal sequence exceeds a predetermined threshold, the second time range being a time range other than the first time range; and

calculating a noise power of the radio signal on the basis of the time-domain signal sequence included in the second time range, wherein
in the re-conversion step, only the channel estimation information in the known signal is converted into the time-domain signal sequence.

FIG. 1

# FIG. 2

1100

S1

1110 SYNCHRONIZATION PROCESSOR

1120 CP REMOVER

1131 S/P CONVERTER

1132 FFT UNIT

S2

1133 CHANNEL EQUALIZER

1150 CHANNEL ESTIMATOR

1134 P/S CONVERTER

1160 FREQUENCY-DOMAIN/ TIME-DOMAIN

S3

1140 DEMODULATOR

1170 TIME-DOMAIN SNR ESTIMATOR

## FIG. 3

1110

```
1113                              1111
TIMING                    CORRELATION-PEAK
DETERMINATION                SEARCHER
UNIT
```

TO : TIME-DOMAIN ←
DIVIDER 1171

## FIG. 4

1170

```
1173                          1171
SNR                      TIME-DOMAIN
CALCULATOR                  DIVIDER
```

FROM : CORRELATION-PEAK
SEARCHER CONVERTER 111

# FIG. 5

START

REMOVE CYCLIC PREFIXES ~S1010

PERFORM FFT ~S1020

CALCULATE CHANNEL ESTIMATION INFORMATION ~S1030

PERFORM RE-CONVERSION FROM
FREQUENCY DOMAIN TO TIME DOMAIN ~S1040

CALCULATE POWER (W) IN TOTAL TIME RANGE (T) ~S1050

CALCULATE POWER Na IN TIME RANGE tn ~S1060

CALCULATE NOISE POWER N
FROM POWER Na IN TIME RANGE tn ~S1070

CALCULATE SIGNAL POWER ~S1080

ESTIMATE SNR ~S1090

END

# FIG. 6

START

SEARCH FOR CORRELATION PEAK OF DELAY WAVE — S1110

DETERMINE PROCESSING TIMING — S1120

REMOVE CYCLIC PREFIXES — S1130

PERFORM FFT — S1140

CALCULATE CHANNEL ESTIMATION INFORMATION — S1150

PERFORM RE-CONVERSION FROM FREQUENCY DOMAIN TO TIME DOMAIN — S1160

DETERMINE LENGTH OF TIME RANGE ts BASED ON SEARCH RESULT OF CORRELATION PEAK — S1170

CALCULATE POWER (W) IN TOTAL TIME RANGE (T) — S1180

CALCULATE POWER Na IN TIME RANGE tn — S1190

CALCULATE NOISE POWER N FROM POWER Na IN TIME RANGE tn — S1200

CALCULATE SIGNAL POWER — S1210

ESTIMATE SNR — S1220

END

# FIG. 7A

# FIG. 7B

# FIG. 8

## FIG. 9A

## FIG. 9B

# FIG. 10

<u>2001</u>

RS

2100

2200

# FIG. 11

EP 2 194 666 A1

# FIG. 12

START

REMOVE CYCLIC PREFIXES ~S2010

PERFORM FFT ~S2020

CALCULATE CHANNEL ESTIMATION INFORMATION IN KNOWN SYMBOL ~S2030

INTERPOLATE CHANNEL ESTIMATION INFORMATION BETWEEN KNOWN SYMBOLS ~S2040

EXTRACT ONLY CHANNEL ESTIMATION INFORMATION OF KNOWN SYMBOLS ~S2050

PERFORM RE-CONVERSION FROM FREQUENCY DOMAIN TO TIME DOMAIN ~S2060

CALCULATE POWER (W) IN TOTAL TIME RANGE (T) ~S2070

CALCULATE POWER Na IN TIME RANGE tn ~S2080

CALCULATE NOISE POWER N FROM POWER Na ZN TIME RANGE tn ~S2090

CALCULATE SIGNAL POWER ~S2100

ESTIMATE SNR ~S2110

END

# FIG. 13A

# FIG. 13B

# FIG. 14

## INTERNATIONAL SEARCH REPORT

| International application No. |
| --- |
| PCT/JP2008/067353 |

A. CLASSIFICATION OF SUBJECT MATTER
*H04J11/00*(2006.01)i, *G01R29/26*(2006.01)i, *H04B17/00*(2006.01)i

According to International Patent Classification (IPC) or to both national classification and IPC

B. FIELDS SEARCHED

Minimum documentation searched (classification system followed by classification symbols)
H04J11/00, G01R29/26, H04B17/00

Documentation searched other than minimum documentation to the extent that such documents are included in the fields searched
Jitsuyo Shinan Koho         1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br><br>Y | WO 2006/95513 A1  (Mega Chips LSI Solutions Inc.),<br>14 September, 2006 (14.09.06),<br>Par. Nos. [0038] to [0050]; Figs. 1 to 5<br>& JP 2006-253915 A    & KR 10-2007-0117645 A<br>& CN 101138178 A | 1-3,5-7,<br>11-16<br>4,8-10 |
| Y | JP 2004-253899 A  (KDDI Corp.),<br>09 September, 2004 (09.09.04),<br>Par. Nos. [0072] to [0073]; Fig. 6<br>& US 2004/0165650 A1 | 4 |
| Y | JP 2000-165346 A  (Toshiba AVE Co., Ltd.),<br>16 June, 2000 (16.06.00),<br>Fig. 4<br>& EP 1006699 A2       & DE 69919666 T | 8-10 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    21 November, 2008 (21.11.08) | Date of mailing of the international search report<br>    09 December, 2008 (09.12.08) |
| --- | --- |
| Name and mailing address of the ISA/<br>    Japanese Patent Office | Authorized officer |
| Facsimile No. | Telephone No. |

Form PCT/ISA/210 (second sheet) (April 2007)

33

**INTERNATIONAL SEARCH REPORT**

| International application No. |
|---|
| PCT/JP2008/067353 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-77788 A  (Sony Corp.),<br>23 March, 2001 (23.03.01),<br>Par. Nos. [0068] to [0076]; Fig. 7<br>& US 6888789 B1        & EP 1083719 A3<br>& EP 1083719 A2        & DE 60025444 T | 8,10 |
| Y | JP 2007-89113 A  (NTT Docomo Inc.),<br>05 April, 2007 (05.04.07),<br>Fig. 4<br>& EP 1898542 A1        & WO 2006/134949 A1<br>& CA 2611157 A | 8,10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002319919 A
- JP 2007255891 A

- JP 2007256312 A